# EUROPEAN PATENT SPECIFICATION

(11) **EP 4 014 794 B1**
(45) Date of publication and mention of the grant of the patent: **18.10.2023**
(21) Application number: 20852385.2
(22) Date of filing: 11.08.2020
(51) Int. Cl.: A47J 19/02, A47J 19/06, A47J 43/046, A47J 43/08

(54) **JUICE EXTRACTOR CAPABLE OF SERVING AS MIXER**
ALS MIXER DIENENDER ENTSAFTER
EXTRACTEUR DE JUS POUVANT SERVIR DE MÉLANGEUR

(30) Priority: 12.08.2019 CN 201910741184
(43) Date of publication of application: 22.06.2022
(73) Proprietor: Zhejiang Linix Motor Co., Ltd., Dongyang, Zhejiang 322118 (CN); Hurom Co., Ltd., Gimhae-si, Gyeongsangnam-do 50877 (KR)
(72) Inventor: ZHAO, Haiqiang, Zhejiang 322118 (CN); KIM, Young Ki, Gimhae-si Gyeongsangnam-do 51006 (KR); KIM, Hyanggon, Gimhae-si Gyeongsangnam-do 50978 (KR); KIM, Dae Hwa, Yangsan-si Gyeongsangnam-do 50654 (KR); RAO, Shengyun, Zhejiang 322118 (CN); LAN, Jianhua, Zhejiang 322118 (CN)
(74) Representative: dompatent von Kreisler Selting Werner - Partnerschaft von Patent- und Rechtsanwälten mbB
(86) International application number: PCT/CN2020/108328
(87) International publication number: WO 2021/027796

(56) References cited:
- EP-A1- 0 645 178
- WO-A1-2015/088176
- WO-A1-2016/165756
- CN-A- 110 384 386
- CN-U- 202 445 918
- CN-U- 207 994 808
- CN-U- 208 582 272
- CN-U- 208 740 789
- CN-U- 208 822 574
- CN-U- 209 172 078
- CN-U- 210 870 982
- CN-Y- 2 693 155
- GB-A- 2 348 323
- JP-A- 2013 066 580
- KR-A- 20070 066 720

## Description

### [Technical Field]

The disclosure relates to a juice extractor capable of serving as a mixer, and more particularly to a juice extractor capable of serving as a mixer, which is usable in two ways: as a juice extractor for crushing and pressing vegetables, fruits or the like ingredients to extract juice by rotating a screw at low speed, and as a mixer for crushing or blending ingredients by rotating a rotary blade at high speed.

### [Background Art]

In general, a mixer refers to an appliance that crushes and blends food ingredients such as vegetables, fruits, grains, etc. with a rotary blade rotating at high speed, and a juice extractor refers to a household appliance that crushes and presses ingredients between a screw rotating at low speed and a mesh drum to make soymilk by grinding and pressing beans like a millstone and to make juice by grating and squeezing tomatoes, kiwis, strawberries, and the like highly viscous fruits like a grater as disclosed in Korean Patent No. 10-0793852.

Document CN 208 740 789 U discloses a juice extractor capable of serving as a mixer, comprising a motor rotating at high speed; a first driving shaft rotated at high speed by the motor; a second driving shaft disposed concentrically with the first driving shaft as a dual shaft; and a main body comprising a reducer to rotate the second driving shaft at low speed; a mixer module comprising a rotary blade that couples with the first driving shaft and rotates at high speed, and mounted to an upper portion of the main body; and a juice-extraction module comprising a screw that couples with the second driving shaft and rotates at low speed, and mounted to the upper portion of the main body in replacement of the mixer module.

### [Disclosure]

### [Technical Problem]

Because both two appliances are similar in rotating a mixing blade or a screw with a motor, the two appliances may be integrated into a single appliance usable in two ways. However, there is a problem that the mixing blade is rotated at high speed but the screw is rotated at low speed.

Patent Document: Korean Patent Publication No. 10-0793852

### [Technical Solution]

Accordingly, the disclosure is conceived to solve such a conventional problem, and an aspect of the disclosure is to provide a juice extractor capable of serving as a mixer, in which two motors rotating at high speed are used to respectively rotate a high-speed driving shaft and a low-speed driving shaft formed concentrically as a dual shaft, and a mixer module for the mixer and a juice-extraction module for the juice extractor are replaceable with each other.

The problems to be solved by the disclosure are not limited to those mentioned above, and other unmentioned problems will become apparent to a person skilled in the art by the following descriptions.

The aspect may be achieved by providing a juice extractor capable of serving as a mixer, including: a first motor and a second motor rotating at high speed; a first driving shaft rotated at high speed by the first motor; a second driving shaft disposed concentrically with the first driving shaft as a dual shaft; and a main body including a reducer disposed between the second driving shaft and a motor shaft of the second motor and reducing rotation speed of the second motor to rotate the second driving shaft at low speed; a mixer module including a rotary blade that couples with the first driving shaft and rotates at high speed, and mounted to an upper portion of the main body; and a juice-extraction module including a screw that couples with the second driving shaft and rotates at low speed, and mounted to the upper portion of the main body in replacement of the mixer module.

Here, the reducer may include at least one reduction gear meshing and rotating between gear teeth formed on an outer circumference of the second driving shaft and the motor shaft of the second motor.

Here, the reduction gear may include a first reduction gear meshing with the motor shaft of the second motor, and a second reduction gear meshing between the first reduction gear and the second driving shaft.

Here, the first reduction gear may include two steps of first gear teeth formed on a small-radius circumference, and second gear teeth formed on a large-radius circumference, the second gear teeth of the first reduction gear mesh with the motor shaft of the second motor, and the first gear teeth of the first reduction gear mesh with the second reduction gear.

Here, the second reduction gear may include two steps of first gear teeth formed on a small-radius circumference, and second gear teeth formed on a large-radius circumference, the second gear teeth of the second reduction gear mesh with the first gear teeth of the first reduction gear, and the first gear teeth of the second reduction gear mesh between gear teeth formed on an outer circumference of the second driving shaft.

### [Advantageous Effects]

As described above, a juice extractor capable of serving as a mixer according to the disclosure has advantages that a high-speed driving shaft and a low-speed driving shaft are concentrically formed as a dual shaft, the mixer module for a mixer and a juice-extraction module for the juice extractor are replaceable with each other and mountable to a single main body, thereby being usable in two ways: as the mixer and as the juice extractor.

Further, there are also advantages that an inexpensive dual motor is employed as a driver for using a single main body in two ways for the mixer and the juice extractor.

### [Description of Drawings]

FIG. 1 is a sectional view of a juice extractor capable of serving as a mixer, when it is used as the juice extractor, according to an embodiment of the disclosure.
FIG. 2is a sectional view of a juice extractor capable of serving as a mixer, when it is used as the mixer, according to an embodiment of the disclosure.
FIG. 3 is a perspective view of a driver according to an embodiment of the disclosure.
FIG. 4 is a sectional view of FIG. 3.
FIG. 5 illustrates operations as the mixer in FIG. 4.
FIG. 6 illustrates operations as a juice extractor in FIG. 4.

**Reference Numerals**

| | | | |
|---|---|---|---|
| 100: | main body | 110: | driver |
| 120: | first motor | 125: | second motor |
| 152: | first driving shaft | 153: | angular protruding portion |
| 154: | second driving shaft | 155: | gear teeth |
| 183: | motor shaft | 184: | gear teeth |
| 190: | first reduction gear | 191: | gear teeth |
| 192: | gear teeth | 194: | second reduction gear |
| 195: | gear teeth | 196: | gear teeth |
| 200: | first housing | 290: | second housing |
| 292: | rotary blade | 294: | rotary blade shaft |
| 300: | screw | 350: | lower rotary shaft |
| 500: | juice-extraction module | 600: | mixer module |

### [Mode for Carrying out Disclosure]

Specific features of embodiments are involved in the detailed description and the accompanying drawings.

The merits and features of the disclosure, and methods of achieving them will become apparent with reference to the embodiments described below in detail and the accompanying drawings. However, the disclosure is not limited to the embodiments set forth herein, but may be implemented in various forms. The following embodiments are provided in order to fully describe the disclosure and enable those skilled in the art, to which the disclosure pertains, to understand the disclosure, the scope of which is defined in the appended claims. Like numerals refer to like elements throughout.

Further, the elements shown in the drawings are randomly illustrated for convenience of description, and the disclosure is not necessarily limited to those shown in the drawings. The elements shown in the drawings may be exaggerated in size and shape for clarity and convenience.

Unless otherwise specified, 'upper side,' 'upper portion,' 'upper end' or the like term refers to a side, to which ingredients are put, or a portion or end close to the side, and 'lower side,' 'lower portion,' or 'lower end' or the like term refers to an opposite side to the side to which ingredients are put, or a portion or end closed to the opposite side.

Below, embodiments of a juice extractor capable of serving as a mixer according to the disclosure will be described with reference to the accompanying drawings.

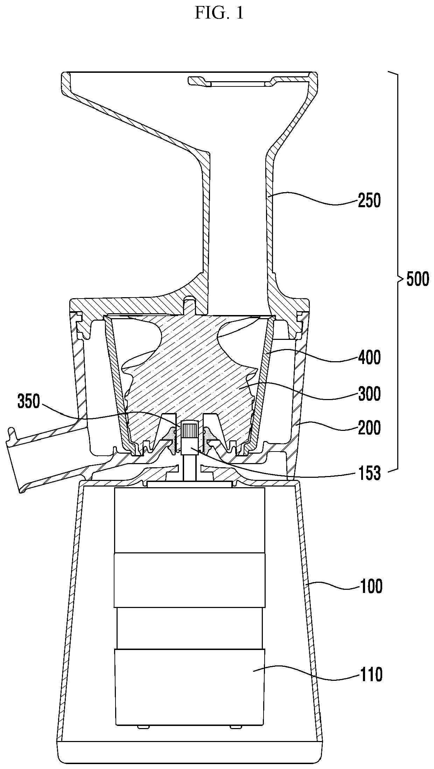

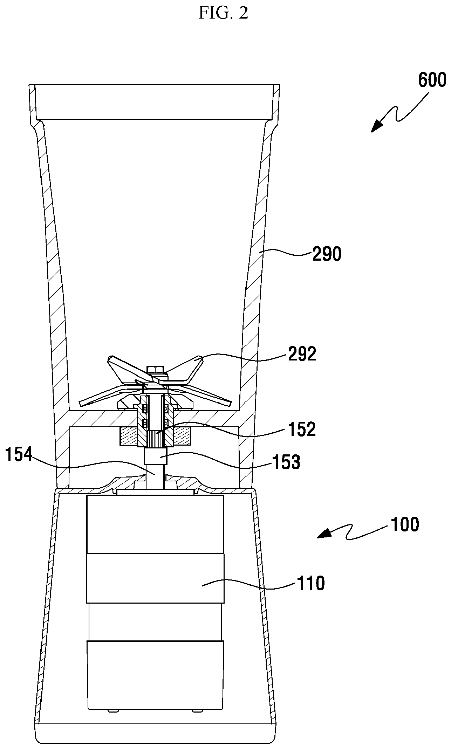

FIG. 1is a sectional view of a juice extractor capable of serving as a mixer, when it is used as the juice extractor, according to an embodiment of the disclosure, and FIG. 2is a sectional view of a juice extractor capable of serving as a mixer, when it is used as the mixer, according to an embodiment of the disclosure.

As shown in FIG. 1, when the juice extractor capable of serving as the mixer according to the disclosure is used as the juice extractor, a juice-extraction module 500, which includes a first housing 200, a screw 300, a juice-extraction drum 400 for separating juice and residues, and a lid for covering the housing200, is mounted to a main body 100.

Further, as shown in FIG. 2, when the juice extractor capable of serving as the mixer according to the disclosure is used as the mixer, a mixer module 600, which includes a second housing 290 internally provided with a rotary blade 292, is mounted to the same main body 10 as that shown in FIG. 1. The mixer is known as an appliance that crushes and mixes food ingredients put into the second housing 290by the rotary blade 292placed in a bottom portion of the second housing 290 and rotating at high speed. However, the mixer according to the disclosure may be extensively construed as an appliance that uses the rotary blade 292 rotating at high speed to process food ingredients.

A first driving shaft 152 rotating at high speed and a second driving shaft 154 rotating at a low speed are provided as a dual shaft concentrically formed protruding from the top of the main body 100. Therefore, the screw 300 of the juice extractor is rotated at low speed by mounting a lower rotary shaft 350 of the screw 300 to the second driving shaft 154, and the rotary blade 292 of the mixer is rotated at high speed by mounting a rotary blade shaft 294 connected to the rotary blade 292 to the first driving shaft 152.

In the juice extractor, the juice-extraction module 500, which includes the first housing 200, the screw 300, juice-extraction drum 400 and the lid 250, and the mixer module 600, which includes the second housing 290 and the rotary blade 292, are publicly known and thus detailed descriptions thereof will be omitted.

Below, it will be described in detail that a driver 110 provided in the main body 100 drives the first driving shaft 152 and the second driving shaft 154 concentrically formed as the dual shaft to rotate at high speed and low speed.

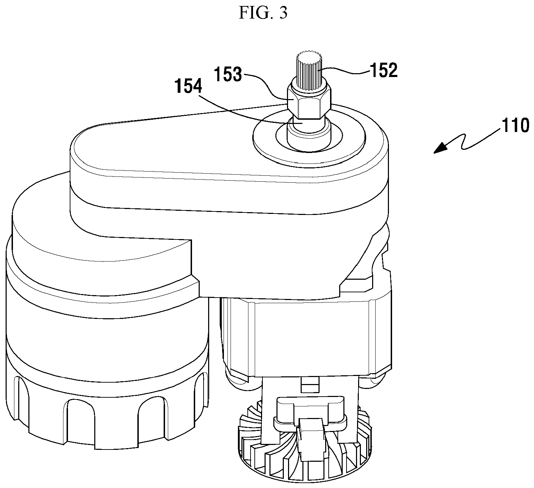

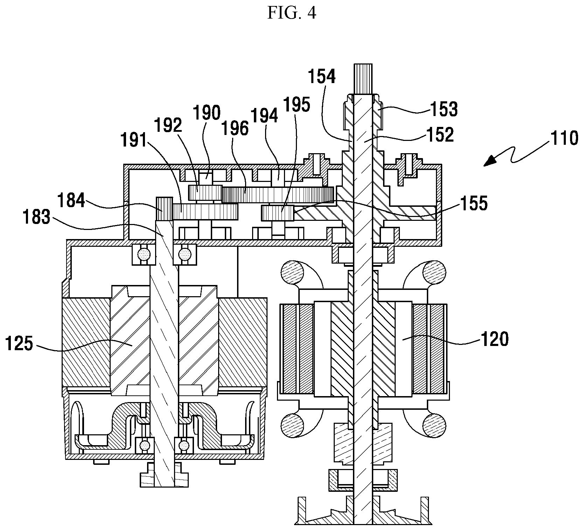

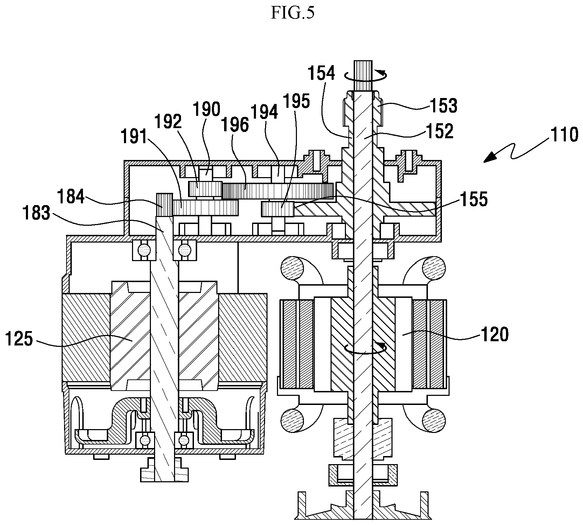

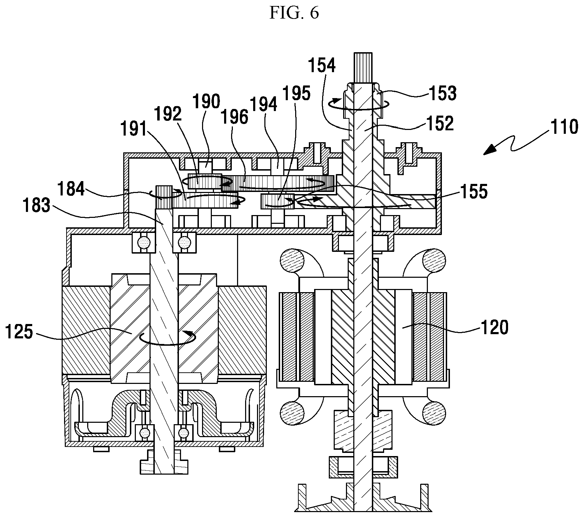

FIG. 3 is a perspective view of a driver according to an embodiment of the disclosure, FIG. 4 is a sectional view of FIG. 3, FIG. 5 illustrates operations as the mixer in FIG. 4, and FIG. 6 illustrates operations as a juice extractor in FIG. 4.

The driver 110 according to an embodiment of the disclosure may include motors 120 and 125, and a reducer.

The motors include a first motor 120 and the second motor 125, i.e., two motors. Both the first motor 120 and the second motor 125 are motors which rotate at high speed.

In this case, the first motor 120 and the second motor 125 according to the disclosure may employ an inexpensive motor that rotates a motor shaft at high speed in one direction. For example, the first motor 120 may employ a commercial universal motor rotatable at a high speed of 2500 to 3000rpm, and the second motor 125 may employ a commercial alternating current (AC) motor rotatable at a high speed of 1800 to 3600 rpm. However, the first motor 120 and the second motor 125are not limited to these examples.

The first motor 120 rotates the first driving shaft 152 at high speed. In this case, the first driving shaft 152 may be the motor shaft of the first motor 120or a separate shaft extended in the lengthwise direction of the motor shaft of the first motor 120 and coupled to the motor shaft. The first driving shaft 152 includes an end portion protruding outward from the top of the main body 100.

The end portion of the first driving shaft 152 protruding outward from the main body 100couples with the rotary blade shaft 294 connected to the rotary blade 292 of the mixer module 600. In this case, the first driving shaft 152 and the rotary blade shaft 294 may be coupled in such a way that the rotary blade shaft 294 is formed as a hollow shaft and the first driving shaft 152 is inserted in the hollow shaft. To reinforce the coupling between the first driving shaft 152 and the rotary blade shaft 294, the first driving shaft 152 may have an angular shape or a surface on which protrusions and grooves are repetitively patterned, and the rotary blade shaft 294 may have the hollow shaft corresponding to the shape of the first driving shaft 152. On the other hand, the rotary blade shaft 294 may be coupled to the first driving shaft 152 in such a way that the end portion of the first driving shaft 152is formed as the hollow shaft and the rotary blade shaft 294 is inserted in the hollow shaft.

Therefore, when the mixer module 600 is mounted to the top of the main body 100,the rotary blade 292can rotate at high speed as the rotary blade shaft 294connected to the rotary blade 292 placed inside the second housing 290 is coupled to the end portion of the first driving shaft 152 that rotates at high speed.

The end portion of the first driving shaft 152may be formed with the second driving shaft 154 surrounding the first driving shaft 152. In other words, the second driving shaft 154 and the first driving shaft 152 are concentrically formed as the dual shaft so that the second driving shaft 154 can surround the end portion of the first driving shaft 152. Like the first driving shaft 152, an upper end portion of the second driving shaft 154 protrudes outward from the main body 100, and the upper end portion of the second driving shaft 154 is formed with an angular protruding portion 153 angularly protruding to be inserted in and coupled to an angular shaft hole formed in the lower rotary shaft 350 of the screw 300.

In this case, the second motor 125 may be disposed at one side of the first motor 120, and a reducer may be provided between the second driving shaft 154 and the second motor 125 to reduce the rotation speed of the second motor 125 rotating at the high speed, thereby rotating the second driving shaft 154 at low speed.

The reducer may be formed as at least one reduction gear 190, 194 meshing and rotating between a motor shaft 183 of the second motor 125 and gear teeth 155 formed on the lower outer circumference of the second driving shaft 154. As shown in the drawings, the gear teeth 184 may be formed on the upper outer circumference of the motor shaft 183 of the second motor 125, and the gear teeth 184 meshes with a first reduction gear 190having a larger number of teeth so that the rotation speed of the first reduction gear 190 can be reduced as compared with that of the motor shaft 183. The gear teeth 184in this embodiment is formed on the outer circumference of the motor shaft 183, but a separate sun gear may alternatively be mounted to the motor shaft 183 without forming the gear teeth 184 in the motor shaft 183.

In this case, as shown in FIG. 4, the first reduction gear 190 is provided with gear teeth191 and 192 at lower and upper portions thereof in a circumferential direction. The gear teeth 191 in the lower portion meshes with the gear teeth 184 formed on the motor shaft 183, and the gear teeth 192 in the upper portion meshes with the gear teeth formed in a second reduction gear 194 provided at one side of the first reduction gear 190. In this case, the upper portion of the first reduction gear 190has a smaller diameter than the lower portion to decrease the number of gear teeth 192 in the upper portion, thereby increasing a reduction ratio between the first reduction gear 190 and the second reduction gear 194.

The second reduction gear 194 is disposed at one side of the first reduction gear 190, so that the second reduction gear 194 can mesh with the gear teeth 192 formed in the upper portion of the first reduction gear 190. Like the first reduction gear 190, the second reduction gear 194is also provided with gear teeth 195 and 196 at lower and upper portions thereof in a circumferential direction. The gear teeth 196 in the upper portion of the second reduction gear 194 meshes with the gear teeth 192 in the upper portion of the first reduction gear 190, and the gear teeth 195 in the lower portion of the second reduction gear 194 meshes with the gear teeth 155 formed on the lower outer circumference of the second driving shaft 154, thereby reducing the rotation speed of the second driving shaft 154. Similarly, the lower portion of the second reduction gear 194has a smaller diameter to decrease the number of gear teeth in the lower portion, and the portion of the second driving shaft 154 where the gear teeth 155 is formed has a larger diameter to increase the number of gear teeth, thereby increasing a reduction ratio between the second reduction gear 194 and the second driving shaft 154.

Therefore, the rotation speed of the second motor 125 rotating at high speed is reduced by the gear ratio between the second motor 125 and the first reduction gear 190, reduced again by the gear ratio between the first reduction gear 190 and the second reduction gear 194, and additionally reduced by the gear ratio between the second reduction gear 194 and the second driving shaft 154, thereby rotating the second driving shaft 154 at lower speed.

Below, it will be described that the driver 110 according to an embodiment drives the first driving shaft 152andthe second driving shaft 154 to rotate at high speed and low speed.

As shown in FIG. 5, when the first motor 120rotates at high speed, the first driving shaft 152can rotate at high speed along with the rotation of the first motor 120. Therefore, the rotary blade shaft 294 connected to the rotary blade 292 of the mixer is coupled to the end portion of the first driving shaft 152, and the rotary blade 292 rotates at high speed, thereby serving as the mixer.

Next, as shown in FIG. 6, when the second motor 125 rotates at high speed, the rotation speed of the second driving shaft 154 may be reduced by the reduction ratios based on one or more reduction gears 190 and 194 provided between the motor shaft 183 and the second driving shaft 154. Therefore, the lower rotary shaft 350 of the screw 300 is coupled to the angular protruding portion 153 provided at the end portion of the second driving shaft 154, and the screw 300 rotates at low speed, thereby serving as the juice extractor.

According to an embodiment, the mixer module 600 is mounted to the upper portion of the main body for the use of the mixer, in which the rotary blade shaft 294 is coupled to the first driving shaft 152 so that the rotary blade 292 can be rotated together with the first driving shaft 152 at high speed by the first motor 120. Further, the juice-extraction module 500 is mounted to the upper portion of the main body 100 for the use of the juice extractor, in which the screw 300 is coupled to the second driving shaft 154 so that the screw 300 can be rotated together with the second driving shaft 154 at low speed by the second motor 125andthe reducer. Accordingly, the individual motors 120, 125 can individually control the first driving shaft 152 and the second driving shaft 154.

The disclosure is not limited to the foregoing embodiments, but may be embodied in various forms within the scope of the appended claims.

## Claims

1. A juice extractor capable of serving as a mixer, comprising:
a first motor (120) and a second motor (125) rotating at high speed;
a first driving shaft (152) rotated at high speed by the first motor;
a second driving shaft (154) disposed concentrically with the first driving shaft as a dual shaft; and
a main body (100) comprising a reducer disposed between the second driving shaft and a motor shaft (183) of the second motor and reducing rotation speed of the second motor to rotate the second driving shaft at low speed;
a mixer module (600) comprising a rotary blade (292) that couples with the first driving shaft and rotates at high speed, and mounted to an upper portion of the main body; and
a juice-extraction module (500) comprising a screw (300) that couples with the second driving shaft and rotates at low speed, and mounted to the upper portion of the main body in replacement of the mixer module.

2. The juice extractor of claim 1, wherein the reducer comprises at least one reduction gear (190; 194) meshing and rotating between gear teeth formed on an outer circumference of the second driving shaft and the motor shaft of the second motor.

3. The juice extractor of claim 2, wherein the reduction gear comprises a first reduction gear (190) meshing with the motor shaft of the second motor, and a second reduction gear (194) meshing between the first reduction gear and the second driving shaft

4. The juice extractor of claim 3, wherein the first reduction gear (190) comprises two steps of first gear teeth formed on a small-radius circumference, and second gear teeth formed on a large-radius circumference, the second gear teeth of the first reduction gear mesh with the motor shaft of the second motor, and the first gear teeth of the first reduction gear mesh with the second reduction gear.

5. The juice extractor of claim 4, wherein the second reduction gear (194) comprises two steps of first gear teeth formed on a small-radius circumference, and second gear teeth formed on a large-radius circumference, the second gear teeth of the second reduction gear mesh with the first gear teeth of the first reduction gear, and the first gear teeth of the second reduction gear mesh between gear teeth formed on an outer circumference of the second driving shaft.

## Patentansprüche

1. Entsafter, der als Mixer dienen kann und aufweist:
einen ersten Motor (120) und einen zweiten Motor (125), die sich mit hoher Geschwindigkeit drehen;
eine erste Antriebswelle (152), die mit hoher Geschwindigkeit von dem ersten Motor gedreht wird;
eine zweite Antriebswelle (154), die zu der ersten Antriebswelle konzentrisch als eine Doppelwelle angeordnet ist; und
einen Hauptkörper (100), der einen Reduzierer aufweist, der zwischen der zweiten Antriebswelle und einer Motorwelle (183) des zweiten Motors angeordnet ist und eine Drehzahl des zweiten Motors reduziert, um die zweite Antriebswelle mit geringer Geschwindigkeit zu drehen;
ein Mixermodul (600), das ein Drehmesser (292) aufweist, das mit der ersten Antriebswelle gekoppelt ist und sich mit hoher Geschwindigkeit dreht, und das an einem oberen Abschnitt des Hauptkörpers angeordnet ist; und
ein Entsaftermodul (500), das eine Schraube (300) aufweist, die mit der zweiten Antriebswelle gekoppelt ist und sich mit geringer Geschwindigkeit dreht, und das an dem oberen Abschnitt des Hauptkörpers anstelle des Mixermoduls montiert ist.

2. Entsafter nach Anspruch 1, wobei der Reduzierer mindestens ein Untersetzungsgetriebe (190; 194) aufweist, das zwischen Zahnrädern, die auf einem Außenumfang der zweiten Antriebswelle und der Motorwelle des zweiten Motors ausgebildet sind, eingreift und sich dreht.

3. Entsafter nach Anspruch 2, wobei das Untersetzungsgetriebe ein erstes Untersetzungsgetriebe (190) aufweist, das mit der Motorwelle des zweiten Motors zusammengreift, und ein zweites Untersetzungsgetriebe (194) aufweist, das zwischen dem ersten Untersetzungsgetriebe und der zweiten Antriebswelle eingreift.

4. Entsafter nach Anspruch 3, wobei das erste Untersetzungsgetriebe (190) zwei Stufen von ersten Zahnrädern, die auf einem Umfang mit kleinem Radius ausgebildet ist, und zweiten Zahnrädern aufweist, die auf einem Umfang mit großem Radium ausgebildet ist, wobei die zweiten Zahnräder des ersten Untersetzungsgetriebes mit der Motorwelle des zweiten Motors zusammengreifen, und wobei die ersten Zahnräder des ersten Untersetzungsgetriebes mit dem zweiten Untersetzungsgetriebe zusammengreifen.

5. Entsafter nach Anspruch 4, wobei das zweite Untersetzungsgetriebe (194) zwei Stufen von ersten Zahnrädern, die auf einem Umfang mit kleinem Radius ausgebildet ist, und zweiten Zahnrädern aufweist, die auf einem Umfang mit großem Radium ausgebildet ist, wobei die zweiten Zahnräder des zweiten Untersetzungsgetriebes mit den ersten Zahnrädern des ersten Untersetzungsgetriebes zusammengreifen, und die ersten Zahnräder des zweiten Untersetzungsgetriebes zwischen Zahnrädern eingreifen, die auf einem Außenumfang der zweiten Antriebswelle ausgebildet ist.

## Revendications

1. Extracteur de jus pouvant servir de mélangeur, comprenant :
un premier moteur (120) et un second moteur (125) tournant à grande vitesse ;
un premier arbre d'entraînement (152) entraîné en rotation à grande vitesse par le premier moteur ;
un second arbre d'entraînement (154) disposé concentriquement avec le premier arbre d'entraînement en tant qu'arbre double ; et
un corps principal (100) comprenant un réducteur disposé entre le second arbre d'entraînement et un arbre moteur (183) du second moteur et réduisant une vitesse de rotation du second moteur pour entraîner en rotation le second arbre d'entraînement à faible vitesse ;
un module mélangeur (600) comprenant une lame rotative (292) qui se couple au premier arbre d'entraînement et tourne à grande vitesse, et monté sur une portion supérieure du corps principal ; et
un module d'extraction de jus (500) comprenant une vis (300) qui se couple au second arbre d'entraînement et tourne à faible vitesse, et monté sur la portion supérieure du corps principal en remplacement du module mélangeur.

2. Extracteur de jus selon la revendication 1, dans lequel le réducteur comprend au moins un engrenage de réduction (190 ; 194) s'engrenant et tournant entre une denture formée sur une circonférence externe du second arbre d'entraînement et l'arbre moteur du second moteur.

3. Extracteur de jus selon la revendication 2, dans lequel l'engrenage de réduction comprend un premier engrenage de réduction (190) s'engrenant avec l'arbre moteur du second moteur, et un second engrenage de réduction (194) s'engrenant entre le premier engrenage de réduction et le second arbre d'entraînement.

4. Extracteur de jus selon la revendication 3, dans lequel le premier engrenage de réduction (190) comprend deux gradins d'une première denture formée sur une circonférence à petit rayon, et d'une seconde denture formée sur une circonférence à grand rayon, la seconde denture du premier engrenage de réduction s'engrène avec l'arbre moteur du second moteur, et la première denture du premier engrenage de réduction s'engrène avec le second engrenage de réduction.

5. Extracteur de jus selon la revendication 4, dans lequel le second engrenage de réduction (194) comprend deux gradins d'une première denture formée sur une circonférence à petit rayon, et d'une seconde denture formée sur une circonférence à grand rayon, la seconde denture du second engrenage de réduction s'engrène avec la première denture du premier engrenage de réduction, et la première denture du second engrenage de réduction s'engrène entre une denture formée sur une circonférence externe du second arbre d'entraînement.
